## Europäisches Patentamt
## European Patent Office
## Office européen des brevets

(19)

(11) Publication number: **0 019 672**
**B1**

(12) **EUROPEAN PATENT SPECIFICATION**

(45) Date of publication of patent specification: **11.04.84**

(21) Application number: **79300963.0**

(22) Date of filing: **29.05.79**

(51) Int. Cl.³: **G 06 F 15/20,**
**E 21 B 47/06, G 01 L 19/08**

(54) Method of and device for recording data down-hole in a well bore.

(43) Date of publication of application:
**10.12.80 Bulletin 80/25**

(45) Publication of the grant of the patent:
**11.04.84 Bulletin 84/15**

(84) Designated Contracting States:
**DE FR GB NL**

(56) References cited:
**CH - A - 514 134**
**FR - A - 2 334 090**
**GB - A - 1 301 292**
**US - A - 3 794 981**
**US - A - 3 855 617**
**US - A - 4 033 186**
**US - A - 4 089 058**

**PETROLEUM ENGINEER INTERNATIONAL, vol.**
**49, no. 10, September 1977, pages 56-62,**
**Dallas, U.S.A. T.S. MATTHEWS: "Bidirectional**
**Telemetry for Downhole Well Logging"**

(73) Proprietor: **OTIS ENGINEERING CORPORATION**
**P.O. Box 34380**
**Dallas, Texas 75234 (US)**

(72) Inventor: **McCracken, Oliver Wendell**
**Route 2 Box 155A**
**Pauls Valley Oklahoma 73075 (US)**

(74) Representative: **Potter, Willoughby Whatnall et al,**
**ERIC POTTER & CLARKSON 14 Oxford Street**
**Nottingham NG1 5BP (GB)**

Courier Press, Leamington Spa, England.

Method of and device for recording data down-hole in a well bore

This invention relates to a method of storing digital sample versus time data down-hole in a well bore in a down-hole tool which is self-contained, said down-hole tool comprising a power source, analogue parameter transducer means, analogue to digital conversion means and RAM storage and said digital sample versus time data being stored in said RAM storage for subsequent readout when the down-hole tool is removed from the well bore, the method comprising the steps of:

—1) initiating an analogue read-out sample for the transducer means;
—2) coverting each said analogue output sample to a digital sample;
—3) storing the digital sample in said RAM storage to be retained for said subsequent readout;
—4) storing in said RAM storage a time tag associated with each stored digital sample; and
— repeating the steps after a delay, the power being supplied by the power source to the transducer means only when the data samples are taken.

The invention also relates to a self-contained down-hole tool for use in the method of the invention, comprising a power source, analogue parameter transducer means, control means selectively applying power to said transducer means only during sample time periods analogue to digital conversion means for converting each analogue output sample from said transducer means to a digital sample, and RAM storage for storing the digital sample and the time at which said digital sample is taken for subsequent readout when the down-hole tool is removed from the well-bore.

Temperature and pressure readings down-hole in a well bore having long been used to provide useful information in the oil industry. These parameters, along with rate of flow etc provide invaluable information about the geological characteristics of the well. Early devices were mechanical and electromagnetical in nature, and as such, provided packaging problems. Spring clock driven charts used delicate mechanisms and sensitivity was poor.

With the advent of solid state electronics, reduction in power requirements was significant, and self contained devices employing solid state memory systems were employed as a means of recording down-hole temperature, pressure and time. US—A—4033186 discloses a device which operates in accordance with the general method as hereinbefore defined. The device processes down-hole gauge signals from plural sensors through a multiplexer and analog-to-digital converter and store binary data in a solid state memory for subsequent readout upon retrieval of the tool from the well bore. The gauge signals generated at time intervals and are stored with corresponding time signals. These intervals are, however, in accordance with a predetermined schedule selected before the device is put into the well, and cannot be varied once the device is in the well to take account of the variation in the rate of change in the data being generated by the gauges or transducers. In addition the device disclosed in US—A—4033186 does not include RAM storage, but only a very basic memory. This does not permit the flexibility of operation which is desirable.

T. S. Matthews, in an article entitled "Bidirectional Telemetry for Downhole Well Logging", published in Petroleum Engineer International, vol 49, no: 10, September 1977, pages 56—62, describes a system which, by contrast with that disclosed in US—A—4 033 186, includes a microcomputer in the downhole tool communicating with, and controlled by, a minicomputer on the surface, via a connection cable. The system is thus not self-contained, requiring ten telemetry channels in the connection cable to the surface. This is costly and requires protection from damage. There is no disclosure of varying the rate of measuring to take account of the rate of change of the data.

FR—A—2 334 090 and US—A—3 794 981 disclose data reduction techniques, but neither suggests their application to down-hole well-logging, and neither discloses or even suggests varying the rate of data acquistion according to the rate of change of the values of the data. Although US—A—3 855 617 discloses the use of different rates for sampling different data sources, these rates are pre-set; there is no suggestion of continuously varying the sampling rate according to the rate of change of the values measured.

In the device disclosed in U.S. Patent Specification No. 3,977,245, a digital system is employed to convert analog gauge readouts to digital format for storage in memory for subsequent readout.

Systems of the above-referenced type, in employing solid state techniques and employing digital storage, offer a decided improvement over early electro-mechanical devices, and are capable of reading and storing appreciably more data for a given run because of the appreciable reduction in battery supplied power.

Systems employing such solid state memory systems are, however, essentially a means for efficiently storing temperature and pressure data and time of obtaining raw uncorrected data. For example, pressure transducers have temperature characteristics which must subsequently be considered and the uncorrected data stored must subsequently be corrected. Analog-to-digital converters employed to process analog readings into binary format for memory storage have zero drift as do temperature and pressure transducers, and these errata must subsequently be considered in processing stored data containing attendent errors into useful, accurate information.

While solid state memory systems are inherently power conservative, as compared to early electromechanical devices, the ultimate utility of such devices may be limited by the memory storage capacity. Known solid state memory systems operate on a predetermined fixed data sampling and storing sequence as defined by clock oscillator countdown dividers. To conserve battery power, the devices are shut down when memory is full, with remaining power utilized to retain stored data in memory. Thus, the length of time for a given data taking run is limited by memory storage capacity and the sampling rate. Under conditions of static pressures and temperatures, the memory is inefficiently utilized in recording redundant, like readings.

Systems employing fixed data sampling and storing intervals may fail accurately to record dynamics of the parameters being measured and, while a particular fixed sampling rate may be grossly high for static conditions of measured parameters, the same fixed rate may be grossly inadequate to record rapidly changing parameters accurately.

It is therefore an object of this invention to provide a self-contained time-referenced down-hole temperature and pressure reading tool for data sampling and storage, whereby data is corrected and linearized prior to memory storage.

A further object is to provide such a self-contained down-hole tool in which battery power is conserved and memory storage capacity is more efficiently utilized.

Accordingly, the method of the invention, which is a method storing digital sample versus time data down-hole in a well bore in a down-hole tool which is self-contained, said down-hole tool comprising a power source analogue parameter transducer means analogue to digital conversion means and RAM storage and said digital sample versus time data being stored in said RAM storage for subsequent readout when the down-hole tool is removed from the well bore, the method comprising the steps of:

—1) initiating an analogue read-out sample for the transducer means;
—2) converting each said analogue output sample to a digital sample;
—3) storing the digital sample in said RAM storage to be retained for said subsequent readout;
—4) storing in said RAM storage a time tag associated with each stored digital sample; and
— repeating the steps after a delay, the power being supplied by the power source to the transducer means only when the data samples are taken;

is characterised in that the steps 1), 2), 3), and 4) are carried out under the control of a microprocessor with said RAM storage and with ROM storage and provided in said down-hole tool and in that each cycle of steps of the method comprises in addition to the steps 1), 2), 3), and 4) hereinbefore defined, the following steps which are carried out by said microprocessor:

—2a) correcting said digital sample using linearisation information in said ROM storage;
—2b) correcting said digital sample using temperature correcting information in said ROM storage;
—3a) determining the difference between each stored digital sample and the next preceding digital sample;
—3b) storing in said RAM storage as the digital sample data to be retained for said subsequent readout only those digital samples differing from the next preceding sample by a value exceeding a significant data change reference value;
—5) computing the data rate of change from the digital sample versus time data as stored according to step 3b) and 4); and
—6) adjusting the delay before the cycle is repeated and thus the rate of taking the samples as a function of the data rate of change and any change in said rate of change.

The tool of the invention is characterised in that it contains a microprocessor with said RAM storage and with ROM storage containing linearisation information and temperature correcting information for use in correcting said digital sample in that the control means is connected to the microprocessor to enable the microprocessor to control the operation of the transducer means.

Data sampling sequences are effected at a rate which varies with the rate of change of the data being sampled by a microprocessor program which, for example, might compare each data sample with the next previous sample, divide the difference by existing time-out interval, and adjust the program time-out interval for a next successive sample taking program sequence accordingly. The absolute value of the changes between successive data samples is compared, by program defined criteria, to a program defined significant data change reference value, with only those instant samples meeting and exceeding the program defined criteria being stored in the memory along with a time lag. Power conservation is attained by controlled power turn-on of transducer and reference bridges during sample times. Microprocessor associated programmable read-only memory devices may hold prewritten linearity and temperature correction data unique to each transducer, with the microprocessor program providing data correction prior to storage.

A specific embodiment of the invention is illustrated in the accompanying drawings, in which:

Figure 1 represents a functional block diagram of the self-contained microprocessor-based down-hole temperature, pressure and time measuring and data storage tool;

Figure 2 is a functional schematic block diagram of the power control interface and transducer portions of the system of Figure 1;

Figure 3 is an alternative switching arrangement useable in the system of Figure 2;

Figure 4 is a program flow chart depicting data sampling and channel time-out adjustment;

Figure 5 is a more detailed diagram of the read and calculate block of the flow chart of Figure 3;

Figure 6 is a program flow chart generally depicting data readout from memory; and

Figure 7 is a functional physical make-up diagram, the self-contained down-hole tool packaging a microprocessor-based temperature, pressure, and time data recorder.

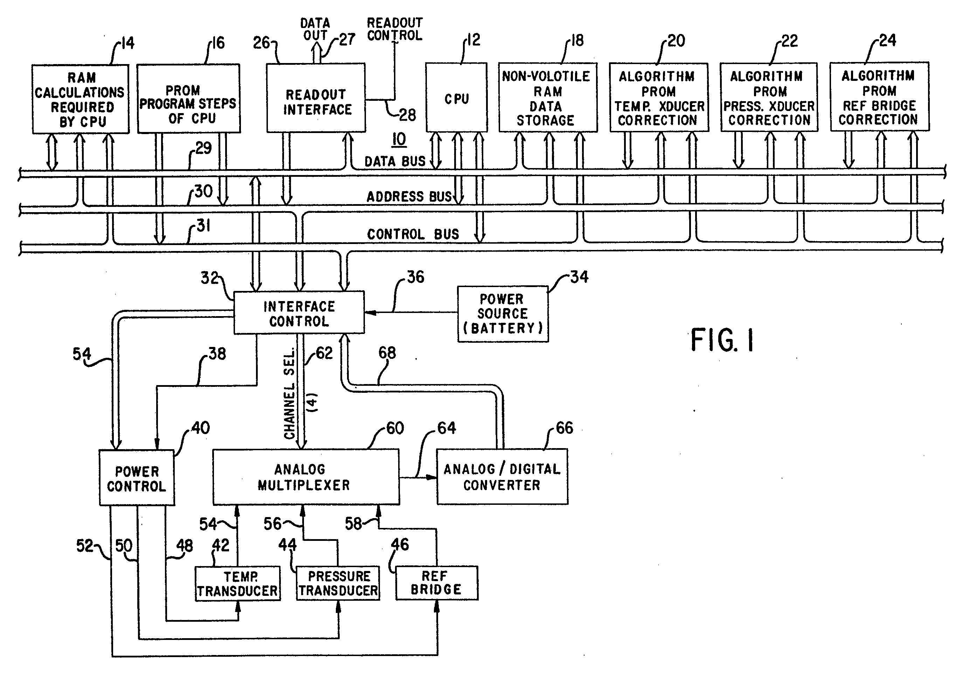

With reference to the functional system diagram of Figure 1, an embodiment of the present invention is shown as comprising a control interface between a data processing and storage system and analog transducers which are sampled by computer activated power control electronics. The upper depicted data processing and storage system 10 comprises a microprocessor including a central processing unit (CPU) 12 along with random access memory (RAM) 14, programmable read-only memory (PROM) 16, random access memory (RAM) 18, and programmable read-only memories (PROMS) 20, 22 and 24. Also shown in a readout interface unit 26 providing a data readout 27 under control of readout control line 28. RAM 14 interfaces to a common data bus 29, a common address bus 30, and a common control bus 31. PROM 16 interfaces with address bus 30 and control bus 31; and CPU 12, RAM 18, and PROMS 20, 22, and 24 interface with each of the data, address and control buses 29, 30, and 31.

As depicted functionally, RAM 14 is utilized in calculations required by CPU 12; PROM 16 provides program steps of the CPU; RAM 18 provides non-volatile data storage (memory); and PROMS 20, 22 and 24 hold linearity correction data for the respective temperature transducer, pressure transducer, and reference bridge elements of the system.

The above described data processing section is interfaced, through data, address, and control bus interfaces with an interface control 32. Power from battery source 34 is supplied interface control 32 via interconnect 36 and selectively via line 38 to a power control circuitry 40.

Power control circuitry 40, as will be further described, time multiplexes power application to temperature transducer 42, pressure transducer 44 and reference bridge 46 via lines 48, 50, and 52 respectively, under control of a digital multiplexing control line 54 between interface 32 and power control circuitry 40.

When energized upon application of power on line 48, temperature transducer 42 develops a temperature analog output on line 54. Likewise, pressure transducer 44, when supplied power on line 50, develops a pressure analog output on line 56; and reference bridge 46, when supplied power on line 52, develops a bridge reference analog output on line 58. Analog outputs 54, 56 and 58 are applied in time multiplexed sequence to an analog multiplexer 60, which, under control of multiplexing data control input 62 from interface control 32, applies each analog output in sequence on line 64 to analog-to-digital converter 66 to output digital data corresponding to the sampling of the temperature, pressure and bridge references on data line 68 to interface control 32 from which it is applied to the common data bus 29.

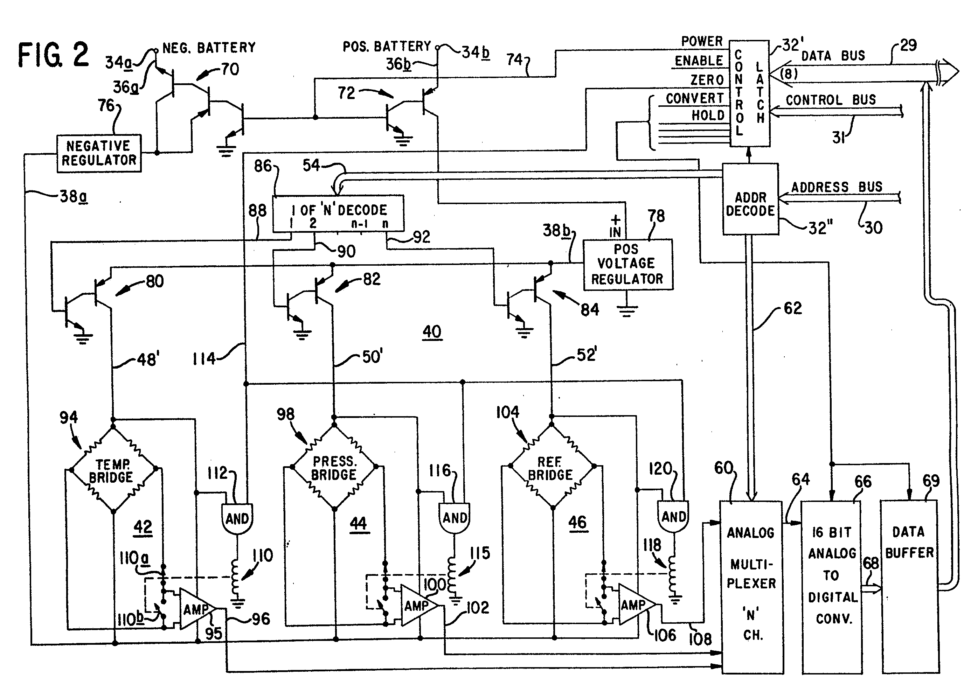

Referring now to Figure 2, wherein certain portions of the interface control and power circuitries are exampled in more detail, battery source 34 is depicted by negative battery terminal 34a and positive battery terminal 34b. With transistor switches 70 and 72 energized by power on control line 74 from control latch circuitry 32', negative battery power is switched to a negative regulator 76 to provide regulated negative voltage on line 38a; and positive battery power is switched to a positive regulator 78 to provide regulated positive voltage on line 38b. Negative regulated power on line 38a, as will be further described, is connected directly to first power junctions of the bridges associated with temperature transducer 42 and pressure transducer 44, and also to a first power junction of reference transducer 46. As shown in Figure 2, positive power on line 38b is not applied directly to the other power junctions of the bridges, but is applied selectively through respective bridge associated transistor switches. This selective switching is accomplished in time multiplexed fashion for each bridge output sampling sequence. Power on line 38b is selectively applied through energized switch 80 onto line 48' associated with temperature transducer 42; through energized switch 82 onto line 50' associated with pressure transducer 44; and through energized switch 84 onto line 52' associated with reference transducer 46. Positive regulated power on line 38b is sequentially switched onto lines 48', 50' and 52' under control of respective outputs from "1 of N" decoder 86 which receives a binary address on line 54 from an address decoder 32". Thus, for example, under control of addresses on common address bus 30 of the microprocessor, a two-bit address may be sequentially incremented to provide sequential switch enabling outputs on output lines 88, 90, and 92 from "1 of N" decoder 86 to sequentially activate transistor switches 80, 82, and 84, and thus sequentially apply positive power on lines 48', 50' and 52'.

With power on line 48', temperature bridge 94 of transducer 42, as well as amplifier 95 to which the output from bridge 94 is applied, are operated to develop an amplifier output 96 which is a voltage analog of temperature. Likewise, with power on line 50'; pressure bridge 98 of transducer 44, as well as amplifier 100 to which the output from bridge 98 is applied, are operable to develop an output 102 from amplifier 100 which is a voltage analog of pressure. Reference bridge 104 and its associated amplifier 106 are operable upon power applied to line 52' to develop an amplifier output 108 which is a voltage analog of the temperature drift of pressure transducer 44; reference bridge 104 being a bridge identical with bridge 98 of pressure transducer 44, but not subject to ambient pressure.

Analog outputs from each of the pressure and temperature transducers, and from the reference bridge, are applied as respective separate inputs to analog multiplexer 60, which, under control of incremented binary addresses on line 62 from address decoder 32", sequentially applies analog outputs from the bridges, as they are developed through power-on activity, onto multiplexer output line 64 for application to analog-to-digital converter 66. Digital outputs on converter 66 output line 68 are thus sequentially applied, via data buffer 69, to the microprocessor common data bus 29 for processing and storage in memory. Preferably the analog-to-digital converter is only powered during sample time periods.

Associated with each of the temperature and pressure transducers, and the reference bridge, is an auto-zeroing feature by means of which zero offset for the bridge output amplifiers may be determined, which offset may be obtained and stored by the computer for program-defined correction of the samples received during the repeated sampling sequences. Referring to Figure 2, a relay 110 and associated contact pairs 110a and 110b is shown in relaxed (unenergized) state with contact pair 110a closed to apply the output from bridge 94 to amplifier 95. Relay contact pair 110b, which shunts the amplifier input terminals, is open in the depicted relaxed state. This depicted state is maintained (relay 110 drawing no power) under normal operating conditions. Output 96 from amplifier 95 may be offset, i.e., experience zero state drift under changing ambient temperature, and this offset must be ascertained in order that the processor may correct the transducer output sample. For this purpose, relay 110 may be periodically energized, as defined by computer programming, to open up the bridge output as applied to amplifier 95, and short the input terminals of amplifier 95, with any then-experienced amplifier output defining a ten-existing offset error in samples of the temperature transducer output. Relay 110 is selectively energized by the output from AND gate 112. Inputs to AND gate 112 comprise the positive power on bridge input line 48' and an enabling output 114 which may be selectively caused to appear from control latch 32' such that a "zero" command on line 114 during any time interval when power is switched onto line 48' to energize bridge 94, will cause relay 110 to operate for determination of zero offset via any output from amplifier 95. Relay 115, associated with pressure transducer 44, is similarly energized by AND gate 116 via power switched onto bridge input line 50' and an enabling signal on line 114. Relay 118 and AND gate 120, associated with reference bridge transducer 46, likewise provide for a zero offset determination for the reference bridge output from amplifier 106.

Zero offset from all three depicted bridge amplifiers may then be selectively determined by computer program command for subsequent utilization in the processor program in correcting subsequently taken data samples from the bridges.

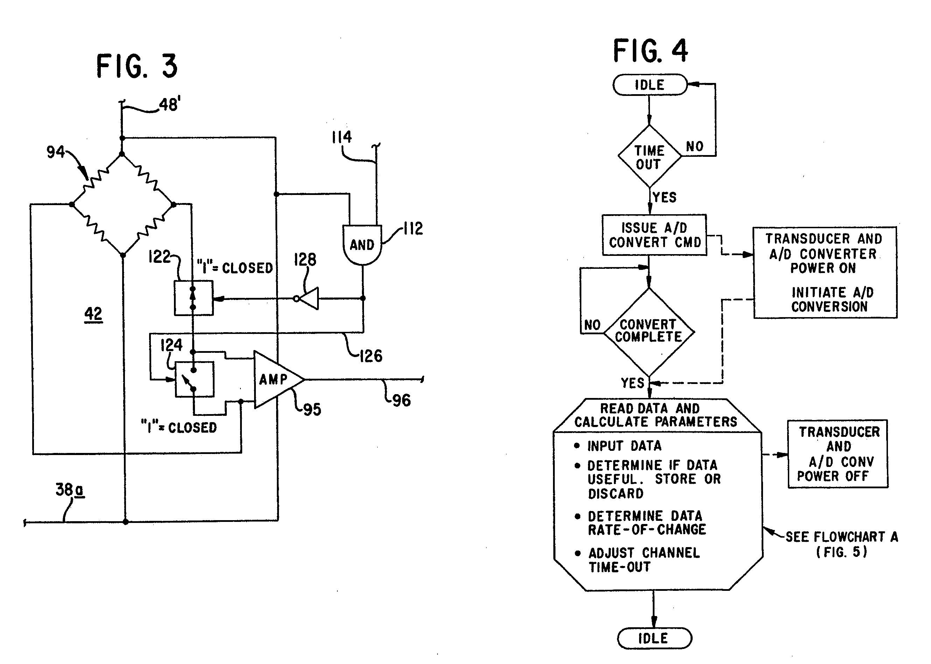

The above-described auto-zeroing feature, embodies relay operated switch contacts to effect the offset determination. Mechanical switch contacts offer the advantage of precluding the switch elements themselves from introducing offset error. The relays 110, 115, and 118 embodied in Figure 2 offer this advantage, and commercially available low power consumption relays contemplated for useage in Figure 2 would not introduce sufficient battery power drain to be inconsistent with the power conservation aspect of the recorder. Alternatively, as functionally shown in Figure 3, the switching functions provided by the relays of Figure 2 may be accomplished by solid state switching means. Referring to Figure 3, a solid state switching arrangement is depicted for temperature transducer 42 as being typical of that which might be associated with each of the bridges in Figure 2. Solid state switching means 122 may replace the relay contact-pair 110a associated with the temperature transducer 42, and solid state switching means 124 may replace the relay contact-pair 110b associated with transducer 42. Each of switches 122 and 124 might comprise a switching element which is energized in response to a logic "1" input. In the depicted relaxed state, AND gate 112 produces a logic "0" output (enabling input on line 114 not present). The logic "0" output 126 from AND gate 112 is applied through inverter 128 as an energizing input to solid state switch 122 and thus closes the bridge output line to amplifier 95, while the AND gate "0" output level applied directly to solid state switch 124 does not energize switch 124. With an enabling logic "1" level on input line 114, and power applied on line 48', AND gate provides a logic "1" output which deactivates switch 122 and activates switch 124 to thereby open the bridge output line and short the input to amplifier 95. It should be noted that use of solid state switching may introduce switch-associated offsets which, unless recognized, may themselves produce offset and drift errors in the data sample outputted by the transducer amplifier. For this reason, the relay switch implementation, in offering mechanical contacts, might be considered preferable and more than compensative for any attendant increased power drain over solid state switching.

The system, as described above, is seen to provide interface with a microprocessor by responding to processor generated control signals to produce digital data sample readouts of pressure, temperature and reference bridges in repeated time multiplexed sequences. Provision for bridge offset determination has been described, such that data is presented the microprocessor which permits the processor to correct the data samples prior to storage. Power conservation techniques have been described whereby the bridge outputs are sampled by controlled application of power thereto, and thereby powered only during sampling periods. Consistent with power conservation, is the feature of having a variable sample rate of the measured variables in the well, where, under relatively static conditions of measured parameters, the sampling rate is low and under rapidly changing state; the sample rate is high. This feature, along with the storage in memory of significant data only, results in maximized useage of memory storage capability as well as power conservation.

The power conservation and efficient memory utilization features are implemented by appropriate programming of the tool microprocessor. Unique data reduction, and sample rate adaption to measured parameter change rate, may be implemented by microprocessor programming.

The data reduction capability of the microprocessor based tool herein described would allow the calibration curve and temperature correction curve for the temperature and pressure transducers and reference bridge to be put into a non-erasable PROM before the tool is run (see PROMS 20, 22 and 24 of Figure 1). The microprocessor, via state of the art programming techniques, then uses the information stored in these PROMS to linearize and correct the data taken from the transducers and bridges before it is entered into the memory of the tool.

The variable sample rate feature is accomplished by a sub routine in the processor program that causes the sample rate to vary, for example, with the changing rate of pressure samples. This routine, as exampled by the flow chart of Figure 4, starts with a time-out interval, effects a sequence of time-multiplexed power application to each of the transducers and reference bridge, inputs data to the CPU, calculates data rate of change for subsequent time-out adjustment, and makes a determination of whether an instant sample constitutes a significant data change which should be stored in memory.

Figure 5 shows a flow-chart definitive of the "read data and calculate parameters" block of Figure 4, where input data sample $S_n$, for example, a pressure sample, is compared to the next previously taken sample $S_{n-1}$. If the absolute value of $S_n - S_{n-1}$ is greater than a predetermined least count, $S_n$ is stored with time tag in memory, whereupon data rate of change may be calculated by division of $S_n - S_{n-1}$ by the current time-out, and a subsequent timeout adjustment made, based upon a programmed criteria. The flow chart further depicts provision for discard of insignificant data which does not represent sufficient change to meet the least count criteria, along with provision for storing a coincidence time-tag should, for example, some preselected number of sample periods occur within data samples meeting the least-count criteria. Time out may then be, according to a program defined algorithim, adjusted as a selected function of data sample rate of change. With slowly varying sample change rate, time-out may be increased, while with increasing sample change rates, the time-out may be decreased accordingly, thus effectively changing the rate at which the routine of Figures 4—5 is performed and thereby adapting the rate of sampling to the dynamics of the measured variable.

Date written into memory (RAM data storage 18 of Figure 1) would contain a pressure reading, a temperature reading, and a time reading. As above discussed, the memory entries would be minimized by varying the sample rate, and by noting significant changes in measured variables as a criteria for writing into memory.

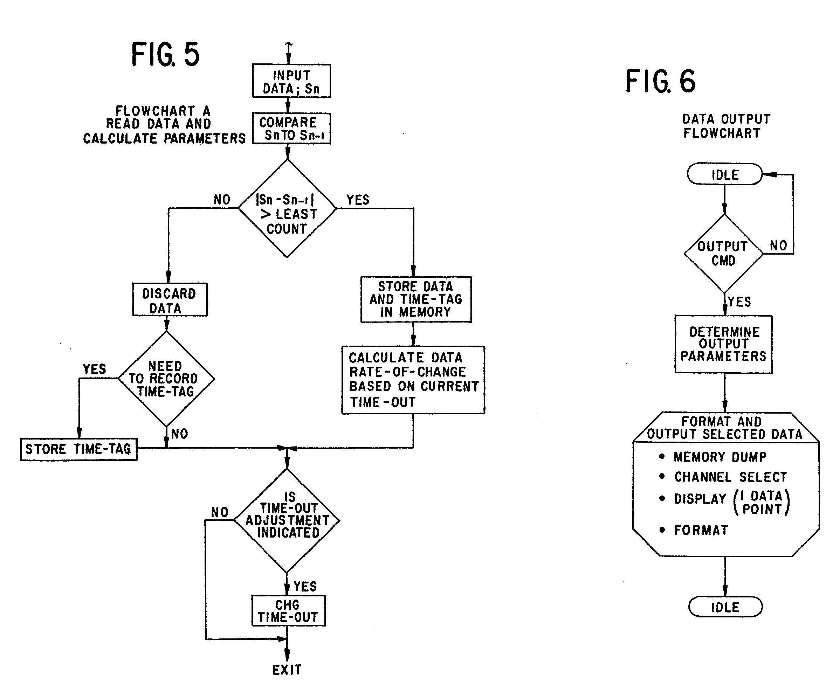

Upon retrievel of the tool form a well bore upon completion of run, surface equipment of commercially purchased type may be used to decode the memory of the down-hole recording tool. For this purpose, Figure 1 generally depicts a readout interface 26 communicating with the data and address busses, along with a readout control line 28 and data output bus 27. Readout might be applied to a minicomputer or microcomputer programmed to reconstruct the pressure versus time and temperature versus time data that existed in the well during the time that the down-hole tool was in place. It may be appreciated that the entire characteristic of the well is not stored in the tool memory, rather an abbreviation of the characteristic is stored, due to the significant data criteria imposed on data storage. The stored data does include time keeping however, such that the running pressure versus time and temperature versus time characteristics may be reconstructed such that they can be displyed, printed or plotted. An exampled data output flow chart is shown in Figure 6. Any number of output formats might be employed to retrieve the stored data in the tool upon completion of a down-hole run.

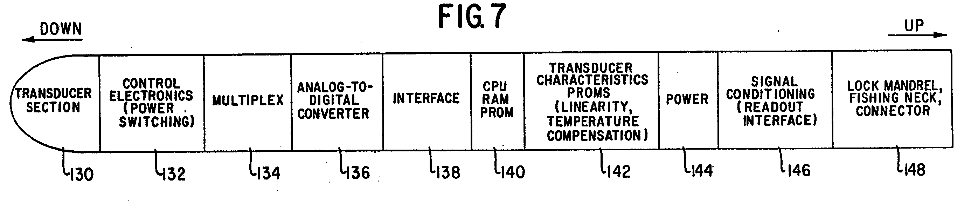

Figure 7 functionally depicts a mechanical configuration of the tool herein described as it might be packaged in, for example, a 1.5 inch diameter housing, with downhole end packaging a transducer section 130 followed successively by power switching section 132, multiplex section 134, analog-to-digital converter section 136, interface section 138, CPU, RAM and PROM section 140, transducer characteristics PROM section 142, power section 144, readout interface section 146, and upper end lock mandrel, fishing neck and connector 148.

**Claims**

1. A method of storing digital sample versus time data down-hole in a well bore in a down-hole tool (Figure 7) which is self-contained, said down-hole tool comprising a power source (144), analogue parameter transducer means (42, 44, 46), analogue to digital conversion means (66) and RAM storage (18) and said digital sample versus time data being stored in said RAM storage for subsequent readout when the down-hole tool is removed from the well bore, the method comprising the steps of:

—1) initiating an analogue read-out sample for the transducer means;

—2) converting each said analogue output sample to a digital sample;

—3) storing the digital sample in said RAM storage to be retained for said subsequent readout;

—4) storing in said RAM storage a time tag associated with each stored digital sample; and

— repeating the steps after a delay, the power being supplied by the power source to the transducer means only when the data samples are taken;

characterised in that the steps 1), 2), 3), and 4) are carried out under the control of a microprocessor (12) with said RAM storage and with ROM storage (16, 20, 22, 24) and provided in said down-hole tool and in that each cycle of steps of the method comprises in addition to the steps 1), 2), 3), and 4) hereinbefore defined, the following steps which are carried out by said microprocessor:

—2a) correcting said digital sample using linearisation information in said ROM storage (16, 20, 22, 24);

—2b) correcting said digital sample using temperature correcting information in said ROM storage (16, 20, 24);

—3a) determining the difference between each stored digital sample and the next preceding digital sample;

—3b) storing in said RAM storage as the digital sample data to be retained for said subsequent readout only those digital samples differing from the next preceding sample by a value exceeding a significant data change reference value;

—5) computing the data rate of change from the digital sample versus time data as stored according to step 3b) and 4); and

—6) adjusting the delay before the cycle is repeated and thus the rate of taking the samples as a function of the data rate of change and any change in said rate of change.

2. A method according to Claim 1, wherein said transducer means comprises temperature and pressure transducers and the tool also comprises a reference bridge, characterised by the step of initiating a preselected program-defined initial time-out period and upon completion of said time-out period carrying out steps (1) through (6) of Claim 1.

3. A method according to Claim 2, characterised in that step 3a) comprises computing from each pressure transducer sample and the associated multiplexed sample output of said reference bridge, a temperature corrected value of said pressure transducer sample, and storing said temperature corrected sample in said register means of said microprocessor.

4. A method according to Claim 2 or 3, characterised in that said time multiplexed samples are effected by a computer interfaced power control, and said transducers and reference bridge are intermittently powered by said power source to effect each said time multiplexed sampling sequence.

5. A method according to Claim 4, wherein said microprocessor computer comprises programmable read only memory means storing calibration and temperature correcting defining data for each of said transducers and said bridge, characterised by the additional sub-step in step 3) of using said microprocessor to linearise and temperature correct said data samples taken from said transducers and bridges prior to being stored in said computer RAM storage means.

6. A method according to Claim 5, characterised in that step 4) comprises the sub-step of storing a confidence time tag and corrected pressure and temperature data in said RAM storage means after a predetermined number of successive data samples fail to meet the criteria defined by step 3b).

7. A self-contained down-hole tool for use in the method of any of Claims 1 to 6, comprising a power source (144), analogue parameter transducer means (42, 44, 46), control means (40) selectively applying power to said transducer means only during sample time periods, analogue to digital conversion means (66) for converting each analog output sample from said transducer means to a digital sample, and RAM storage (18) for storing the digital sample and the time at which said digital sample is taken for subsequent readout when the down-hole tool is removed from the well-bore, characterised in that the down-hole tool also contains a microprocessor with said RAM storage and with ROM storage (16, 20, 22, 24) containing linearisation information and temperature correcting information for use in correcting said digital sample, and in that the control means (40) is connected to the microprocessor to enable the microprocessor to control the operation of the transducer means (42, 44, 46).

8. A down-hole tool according to Claim 7, characterised in that power is applied to said analog to digital conversion means only during the sample time periods.

9. A down-hole tool according to Claim 8, characterised in that one of said transducer means comprises a pressure sensitive bridge (44) and in that the tool comprises a reference bridge means (46) like that of said pressure transducer means (44) and not subject to ambient pressure, said reference bridge means being sampled with said pressure transducer bridge output, and means responsive to said reference bridge samples to remove temperature drift from said pressure samples prior to storage in said memory.

10. A down-hole tool according to Claim 9, characterised by programmable read-only memory means (PROM) (20, 22, 24) storing calibration characteristics of each said transducer over the range of parameter to be measured.

11. A down-hole tool according to 10, characterised in that said computer means is programmed to effect an initial time-out period of selected duration prior to effecting a first sample taking sequence.

12. A down-hole tool according to any of Claims 7 to 11, characterised in that the variable parameters are temperature and pressure.

**Revendications**

1. Procédé pour enregistrer des données numériques d'échantillonnage en fonction du temps en fond de forage dans un outil de fond (figure 7) qui est autonome, ledit outil de fond comprenant une source d'énergie (144), des moyens (42, 44, 46) de transduction de paramètres analogiques, des moyens (66) de conversion analogique/numérique et une mémoire vive (18), et lesdites données numériques d'échantillonnage en fonction du temps étant mémorisées dans ladite mémoire vive pour être ensuite extraites lorsque l'outil de fond est retiré du sondage, le procédé comprenant les étapes qui consistent:

—1) à déclencher un échantillon de lecture analogique pour les moyens de transduction;

—2) à convertir chaque échantillon analogique de sortie en un échantillon numérique;

—3) à mémoriser l'échantillon numérique dans ladite mémoire vive afin qu'il soit retenu pour ladite extraction suivante;

—4) à mémoriser dans ladite mémoire vive un indicateur de temps associé à chaque échantillon numérique mémorisé; et

— à répéter les étapes après une temporisation, la puissance étant fournie par la source d'énergie aux moyens de transduction uniquement lorsque les échantillons de données sont pris;

caractérisé en ce que les étapes 1), 2), 3) et 4) sont effectuées sous la commande d'un microprocesseur (12), associé à ladite mémoire vive et une mémoire morte (16, 20, 22, 24) et disposé dans ledit outil de fond, et en ce que chaque cycle d'étapes du procédé comprend, en plus des étapes 1), 2), 3) et 4) définies précédemment, les étapes suivantes qui sont effectuées par ledit microprocesseur:

—2a) une correction dudit échantillon numérique à l'aide d'une information de linéarisation dans ladite mémoire morte (16, 20, 22, 24);

—2b) une correction dudit échantillon numérique à l'aide d'une information de correction de température dans ladite mémoire morte (16, 20, 24);

—3a) une détermination de la différence entre chaque échantillon numérique mémorisé et l'échantillon numérique immédiatement précédent;

—3b) une mémorisation dans ladite mémoire vivé, en tant que données d'échantillons numériques à retenir pour ladite extraction suivante, uniquement des échantillons numériques différant de l'échantillon précédent immédiatement d'une valeur dépassant une valeur significative de référence de changement de données;

—5) un calcul du rythme de variation des données à partir des données numériques d'échantillonnage en fonction du temps, telles que mémorisées conformément aux étapes 3b) et 4); et

—6) un réglage de la temporisation avant la répétition du cycle et donc de la fréquence de prise des échantillons en fonction du rythme de variation des données et de toutes variations dudit rythme de variation.

2. Procédé selon la revendication 1, dans lequel lesdits moyens de transduction comprennent des transducteurs de température et de pression et l'outil comprend également un pont de référence, caractérisé par l'étape qui consiste à déclencher une période présélectionnée de délai initial, définie par un programme et, à la fin de ladite période de délai, à effectuer les étapes (1) à (6) de la revendication 1.

3. Procédé selon la revendication 2, caractérisé en ce que l'étape 3a) consiste à calculer, à partir de chaque échantillon de transducteur de pression et de la sortie d'échantillon multiplexée et associée dudit pont de référence, une valeur corrigée en température dudit échantillon de transducteur de pression, et à mémoriser ledit échantillon corrigé en température dans lesdits moyens à registre dudit microprocesseur.

4. Procédé selon la revendication 2 ou 3, caractérisé en ce que lesdits échantillons à multiplexage temporel sont produits par une commande de puissance en interface avec un ordinateur, et lesdits transducteurs et pont de référence sont alimentés par intermittence par ladite source d'énergie pour effectuer chaque séquence d'échantillonnage à multiplexage temporel.

5. Procédé selon la revendication 4, dans lequel ledit ordinateur à microprocesseur comprend une mémoire morte programmable mémorisant des données définissant un étalonnage et une correction en température pour chacun desdits transducteurs et dudit pont, caractérisé par la sous-étape supplémentaire, dans l'étape 3), consistant à utiliser ledit microprocesseur pour linéariser et corriger en température lesdits échantillons de données pris sur lesdits transducteurs et ponts avant leur mémorisation dans ladite mémoire vive de l'ordinateur.

6. Procédé selon la revendication 5, caractérisé en ce que l'étape 4) comprend la sous-étape consistant à mémoriser un indicateur de temps de fiabilité et des données corrigées en pression et en température dans ladite mémoire vive après qu'un nombre prédéterminé d'échantillons successifs de données n'a pas satisfait les critères définis par l'étape 3b).

7. Outil de fond autonome destiné à être utilisé dans le procédé selon l'une quelconque des revendications 1 à 6, comprenant une source d'énergie (144), des moyens (42, 44, 46) de transduction de paramètres analogiques, des moyens (40) de commande appliquant sélectivement de la puissance auxdits moyens de transduction uniquement pendant des périodes de temps d'échantillonnage, des moyens (66) de conversion analogique/numérique destinés à convertir chaque échantillon analogique de sortie provenant desdits moyens de transduction en un échantillon numérique, et une mémoire vive (18) destinée à mémoriser l'échantillon numérique et le temps auquel ledit échantillon numérique est pris pour être ensuite extrait lorsque l'outil de fond est retiré du sondage, caractérisé en ce que l'outil de fond contient également un microprocesseur avec ladite mémoire vive et une mémoire morte (16, 20, 22, 24) contenant une information de linéarisation et une information de correction en température à utiliser pour corriger ledit échantillon numérique, et en ce que les moyens (40) de commande sont connectés au microprocesseur pour autoriser le microprocesseur à commander le fonctionnement des moyens de transduction (42, 44, 46).

8. Outil de fond selon la revendication 7, caractérisé en ce que la puissance est appliquée auxdits moyens de conversion analogique/numérique uniquement pendant les périodes de temps d'échantillonnage.

9. Outil de fond selon la revendication 8, caractérisé en ce que l'un desdits moyens de transduction comprend un pont (44) sensible à la pression et en ce que l'outil comprend un moyen (46) à ont de référence analoque à celui dudit moyen (44) de transduction de pression et non soumis à la pression ambiante, ledit moyen à pont de référence étant échantillonné par la sortie dudit pont transducteur de pression, et des moyens qui, en réponse auxdits échantillons du pont de référence, éliminent la dérive en température desdits échantillons de pression avant la mémorisation dans ladite mémoire.

10. Outil de fond selon la revendication 9, caractérisé par des moyens à mémoire morte programmable (PROM) (20, 22, 24) mémorisant des caractéristiques d'étalonnage de chacun desdits transducteurs sur la plage du paramètre à mesurer.

11. Outil de fond selon la revendication 10, caractérisé en ce que lesdits moyens à ordinateur sont programmés pour établir une période de délai initial de durée choisie avant de procéder à une première séquence de prises d'échantillon.

12. Outil de fond selon l'une quelconque des revendications 7 à 11, caractérisé en ce que les paramètres variables sont la température et la pression.

**Patentansprüche**

1. Verfahren zum Speichern digitaler Meßwert-gegen-Zeit-Daten unten in einem Bohrloch in einem in sich geschlossenen Bohrlochgerät (Fig. 7) mit einer Stromquelle (144), analogen Parameter-Übertragungseinrichtungen(Meßwertumformer) (42, 44, 46), Analog-Digital-Wandler (66) und RAM-Speicher (18), wobei digitale Meßwert-gegen-Zeit-Daten in RAM-Speicher gespeichert werden zur nachfolgenden Ausgabe, wenn das Bohrlochgerät aus dem Bohrloch entfernt ist, mit den folgenden Verfahrensschritten:

—1) Initiieren eines analogen Ausgabe-Meßwertes für die Übertragungseinrichtung;

—2) Umwandeln jedes analogen Ausgangs-Meßwertes in einen digitalen Meßwert;

—3) Speichern des digitalen Meßwertes im RAM-Speicher zum Halten für die nachfolgende Ausgabe;

—4) Speichern einer mit jedem gespeicherten

digitalen Meßwert verknüpften Zeitmarkierung im RAM-Speicher; und
— Wiederholen der Verfahrensschritte nach
einer Verzögerung, wobei den Über-
tragungseinrichtungen nurwährend des Auf-
nehmens der Daten-Meßwerte Strom von
der Stromquelle zugeführt wird;

dadurch gekennzeichnet, daß die Verfahrensschritte 1), 2), 3) und 4) unter der steuerung
eines im Bohrlochgerät vorgesehenen Mikroprozessors (12) mit dem RAM-Speicher und mit
ROM-Speicher (16, 20, 22, 24) durchgeführt
werden, und daß jeder Zyklus von Verfahrensschritten zusätzlich zu den vorstehend definierten Verfahrensschritten 1), 2), 3) und 4) die
nachfolgenden Verfahrensschritte aufweist, die
vom Mikroprozessor durchgeführt werden:

—2a) Korrigieren des digitalen Meßwertes
unter Verwendung von Linearisierungs-
Information im ROM-Speicher (16, 20,
22, 24);
—2b) Korrigieren des digitalen Meßwertes
unter Verwendung von Temperaturkorrektur-Information im ROM-Speicher
(16, 20, 24);
—3a) Bestimmen der Differenz zwischen
jedem gespeicherten digitalen Meßwert
und dem nächsten vorausgehenden digitalen Beßwert;
—3b) Speichern nur derjenigen digitalen Meßwerte im RAM-Speicher als für die nachfolgende Ausgabe zuhaltende digitale
Meßdaten, die sich vom nächsten vorausgehenden Meßwert um einen Wert
unterscheiden, der einen signifikanten
Referenzwert für die Änderung der Daten
überschreitet;
—5) Berechnen der Änderungsgeschwindigkeit der Daten aus den entsprechend den
Verfahrensschritten 3b) und 4) gespeicherten digitalen Meßwert-gegen-Zeit-
Daten; und
—6) Anpassen der Verzögerung vor dem
Wiederholen des Zyklus und damit der
Meßwert-Aufnahmegeschwindigkeit als
Funktion der Änderungsgeschwindigkeit
der Daten und jeder Änderung dieser
Änderungsgeschwindigkeit.

2. Verfahren nach Anspruch 1, wobei die
Übertragungseinrichtungen Temperatur- und
Druckaufnehmer und das Gerät auch eine
Referenzbrücke aufweisen, gekennzeichnet
durch den Verfahrensschritt, daß eine vorher
ausgewählte, vom Programm definierte anfängliche Sperrzeitdauer aufgerufen wird und nach
Beendigung der Sperrzeitdauer die Verfahrensschritte (1) bis (6) gemäß Anspruch 1 durchgeführt werden.

3. Verfahren nach Anspruch 2, dadurch
gekennzeichnet, daß beim Verfahrensschritt 3a)
von jedem Druckaufnehmer-Meßwert und dem
damit verknüpften Multiplex-Meßwertausgang
der Referenzbrücke ein temperaturkorrigierter
Wert des Druckaufnehmer-Meßwertes berechnet und der temperaturkorrigierte Meßwert in
der Speichereinrichtung des Mikroprozessors
gespeichert wird.

4. Verfahren nach Anspruch 2 oder 3, dadurch gekennzeichnet, daß die Zeitmultiplex-
Meßwerte von einer eine Computer-Schnittstelle aufweisenden Stromregelung bewirkt
werden, und daß die Aufnehmer und die
Referenzbrücke intermittierend von der Stromquelle mit Strom versorgt werden, um jede der
Zeitmultiplex-Meßwertfolgen zu bewirken.

5. Verfahren nach Anspruch 4, wobei der
Mikroprozessor-Computer programmierbare Festwertspeicher (PROM's) aufweist, die Kalibrierdaten und die Temperaturkorrektur
definierende Daten für jeden der Aufnehmer und
die Brücke speichern, gekennzeichnet durch den
zusätzlichen Teilschritt im Verfahrensschritt 3),
daß der Mikroprozessor zum Linearisieren und
Temperaturkorrigieren der von den Aufnehmern und Brücken aufgenommenen Meßdaten
vor deren Speicherung in den RAM-Speichern
des Computers verwendet wird.

6. Verfahren nach Anspruch 5, dadurch
gekennzeichnet, daß der Verfahrensschritt 4)
den Teilschritt aufweist, daß eine Vertrauens-
Zeitmarkierung und korrigierte Druck- und
Temperaturdaten im RAM-Speicher gespeichert werden, nachdem eine vorher festgelegt
Anzahl aufeinanderfolgender Meßdaten nicht
die im Verfahrensschritt (3b) definierten
Kriterien erfüllt.

7. In sich geschlossenes Bohrlochgerät zur
Verwendung im Verfahren nach einem der Ansprüche 1 bis 6, mit einer Stromquelle (144),
analogen Parameter-Übertragungseinrichtungen (42, 44, 46), einer Steuereinrichtung (40),
die nur während der Zeitdauer der Meßwertaufnahme selektiv Strom an die Übertragungseinrichtungen anlegt, einer Analog-Digital-
Wandlereinrichtung (66) zum Umwandeln jedes
analogen Ausgangsmeßwertes von den Über-
tragungseinrichtungen in einen digitalen Meß-
wert, und einem RAM-Speicher (18) zum Speichern des digitalen Meßwertes und der Zeite, zu
der der digitale Meßwert aufgenommen ist, zur
nachfolgenden Ausgabe, wenn das Bohrlochgerät aus dem Bohrloch entfernt ist, dadurch
gekennzeichnet, daß das Bohrlochgerät auch
einen Mikroprozessor mit dem RAM-Speicher
und ROM-Speicher (16, 20, 22, 24) aufweist,
der die zum Korrigieren des digitalen Meßwertes verwendete Linearisierungs-Information
und Temperaturkorrektur-Information enthält,
und daß die Steuereinrichtung (40) mit dem
Mikroprozessor verbunden ist, um die Steuer-
ung des Betriebs der Übertragungseinrichtun-
gen (42, 44, 46) durch den Mikroprozessor zu
ermöglichen.

8. Bohrlochgerät nach Anspruch 7, dadurch
gekennzeichnet, daß der Analog-Digital-Wandlereinrichtung nur während der Zeitdauern der
Meßwertaufnahme Strom zugeführt wird.

9. Bohrlochgerät nach Anspruch 8, dadurch gekennzeichnet, daß eine der Übertragungseinrichtungen eine druckempfindliche Brücke (44) aufweist, und daß das Gerät eine nicht dem Umgebungsdruck ausgesetzte Referenz-Brückeneinrichtung (46) wie diejenige der Druckübertragungseinrichtung (44) aufweist, wobei die Referenz-Brückeneinrichtung mit dem Ausgang der Brücke der Druckübertragunseinrichtung abgetastet wird, und auf die Meßwerte der Referenzbrücke ansprechende Einrichtungen, um eine Temperaturdrift aus den Druckmeßwerten vor deren Speicherung im Speicher zu entfernen.

10. Bohrlochgerät nach Anspruch 9, gekennzeichnet durch eine programmierbare Festwertspeichereinrichtung (PROM) (20, 22, 24), die die Kalibrierungs-Charakteristika von jeder der Übertragungseinrichtungen über den zu messenden Parameterbereich speichert.

11. Bohrlochgerät nach Anspruch 10, dadurch gekennzeichnet, daß die Rechenrichtung derart programmiert ist, daß vor einer ersten Meßwertaufnahmefolge eine anfängliche Sperrzeit mit ausgewählter Dauer bewirkt wird.

12. Bohrlochgerät nach einem der Ansprüche 7 bis 11, dadurch gekennzeichnet, daß die variablen Parameter Temperatur und Druck sind.

FIG. I

0 019 672

FIG. 2

# FIG. 3

48'

94

42

122    "I"= CLOSED

128

124

AMP    95

"I"= CLOSED

38a

114

AND    112

126

96

# FIG. 4

IDLE

TIME OUT — NO

YES

ISSUE A/D CONVERT CMD — — → TRANSDUCER AND A/D CONVERTER POWER ON

INITIATE A/D CONVERSION

CONVERT COMPLETE — NO

YES

READ DATA AND CALCULATE PARAMETERS
- INPUT DATA
- DETERMINE IF DATA USEFUL. STORE OR DISCARD
- DETERMINE DATA RATE-OF-CHANGE
- ADJUST CHANNEL TIME-OUT

TRANSDUCER AND A/D CONV POWER OFF

SEE FLOWCHART A (FIG. 5)

IDLE

0 019 672

# FIG. 5

FLOWCHART A
READ DATA AND
CALCULATE PARAMETERS

INPUT DATA; $S_n$

COMPARE $S_n$ TO $S_{n-1}$

$|S_n - S_{n-1}| >$ LEAST COUNT

- NO → DISCARD DATA
- YES → STORE DATA AND TIME-TAG IN MEMORY

DISCARD DATA → NEED TO RECORD TIME-TAG
- YES → STORE TIME-TAG
- NO

STORE DATA AND TIME-TAG IN MEMORY → CALCULATE DATA RATE-OF-CHANGE BASED ON CURRENT TIME-OUT

IS TIME-OUT ADJUSTMENT INDICATED
- NO
- YES → CHG TIME-OUT

EXIT

# FIG. 6

DATA OUTPUT FLOWCHART

IDLE

OUTPUT CMD
- NO → IDLE
- YES → DETERMINE OUTPUT PARAMETERS

FORMAT AND OUTPUT SELECTED DATA
- MEMORY DUMP
- CHANNEL SELECT
- DISPLAY $\left(\begin{array}{c} \text{I DATA} \\ \text{POINT} \end{array}\right)$
- FORMAT

IDLE

0 019 672

# FIG. 7

DOWN ←

UP →

| TRANSDUCER SECTION | CONTROL ELECTRONICS (POWER SWITCHING) | MULTIPLEX | ANALOG-TO-DIGITAL CONVERTER | INTERFACE | CPU RAM PROM | TRANSDUCER CHARACTERISTICS PROMS (LINEARITY, TEMPERATURE COMPENSATION) | POWER | SIGNAL CONDITIONING (READOUT INTERFACE) | LOCK MANDREL, FISHING NECK, CONNECTOR |
|---|---|---|---|---|---|---|---|---|---|
| 130 | 132 | 134 | 136 | 138 | 140 | 142 | 144 | 146 | 148 |

0 019 672